# DEMANDE DE BREVET EUROPEEN

(11) **EP 4 696 131 A1**
(43) Date de publication de la demande: **18.02.2026**
(21) Numéro de dépôt: 25177506.0
(22) Date de dépôt: 20.05.2025
(51) Int. Cl.: A01G 9/02, E04F 13/12

(54) **ÉLÉMENT D HABILLAGE D'UNE PAROI ET KIT COMPORTANT AU MOINS UN TEL ÉLÉMENT**

(30) Priorité: 14.08.2024 FR 2408936
(71) Demandeur: ULTRAWATT, 63118 Cébazat (FR)
(72) Inventeur: BATTUT, Jean-Charles, 63119 CHATEAUGAY (FR)
(74) Mandataire: Dennemeyer & Associates S.A.

(57) **Abrégé**

L'invention concerne un élément d'habillage (1) d'une paroi comparent un fond (2) pourvu de quatre bords (4 à 7) repliables, ledit fond formant un parallélépipède lorsque ses bords (4 à 7) sont pliés à angle droit, un couvercle (8) pourvu de quatre bords (11 à 14) repliables, ledit couvercle (8) formant un parallélépipède lorsque ses bords (11 à 14) sont pliés à angle droit, ce couvercle (8) obturant de manière amovible l'ouverture du parallélépipède formé par le fond (2) et en ce que l'ensemble, fond (2) et couvercle (8), est inséré de manière amovible dans la lumière (16) d'un cadre (15) en forme de parallélogramme dont deux bords (19,20) parallèles sont de forme triangulaire. L'invention concerne aussi un kit comportant au moins un tel élément (1).

## Description

L'invention a trait à un élément d'habillage d'une paroi et à un kit comportant au moins un tel élément. Ici, le terme paroi désigne une paroi verticale ou inclinée par rapport à l'horizontale, voire carrément horizontale, quelle que soit la nature de cette paroi, qu'elle soit en béton, parpaing, brique, bois, métal ou tout autre matériau. Une telle paroi peut être une partie structurelle, externe comme un mur ou interne comme une cloison, d'un bâtiment qu'il soit à usage domestique, commercial, industriel ou autre. Ce peut également être une paroi isolée telle qu'un mur de clôture, de séparation ou autre. Par la suite, afin de faciliter la lecture, l'invention sera plus particulièrement décrite dans le cas d'une paroi extérieure verticale constitutive d'une structure telle qu'un bâtiment. De telles parois sont fréquemment dénommées par le terme façade qui sera ici employé indifféremment en alternance avec les termes paroi ou mur.

Dans le domaine de la construction, on connaît des dispositifs permettant d'habiller des parois, en particulier des dispositifs de végétalisation. Ces dispositifs, outre un effet esthétique, permettent de purifier l'air entrant dans un bâtiment, d'avoir une température environnante autour de la paroi inférieure à la température externe, une régulation thermique du bâtiment. Ces dispositifs participent à la biodiversité et l'isolation des bâtiments. FR-A-2 982 732 concerne un filet souple avec des poches recevant les végétaux. EP-A-0708 208 divulgue des empilements de bacs ouverts vers le haut et recevant les plantes. WO-A-2017 146 628 concerne des cassettes recevant des végétaux et pourvues de parois percées permettant à l'air entrant dans le bâtiment d'être filtré à travers les végétaux lorsque l'air traverse les cassettes. On connait par IT-A-2021 0001 6973 un récipient mural en forme de cadre contenant de la terre et des végétaux. Le cadre est fixé sur une paroi interne et fermé par un couvercle perforé. Le dispositif constitue un filtre biologique pour un environnement clos. Les dispositifs connus sont plus ou moins complexes à mettre en œuvre et ne permettent de réaliser que des parois entièrement végétalisées, cela de manière non modulable. L'invention propose une nouvelle solution pour réaliser une paroi végétalisée, aisée à mettre en place, modulable et permettant d'avoir une paroi plus ou moins végétalisée selon les besoins.

À cet effet, l'invention a pour objet un élément d'habillage d'une paroi, comprenant un fond en forme de parallélogramme plan et plein pourvu de quatre bords repliables, ledit fond formant un parallélépipède lorsque ses bords sont pliés à angle droit par rapport au plan principal du fond, un couvercle en forme de parallélogramme plan pourvu de quatre bords repliables, ledit couvercle formant un parallélépipède lorsque ses bords sont pliés à angle droit par rapport au plan principal du couvercle, ce dernier obturant de manière amovible l'ouverture du parallélépipède formé par le fond, l'ensemble, formé par le fond et le couvercle, étant inséré de manière amovible dans la lumière d'un cadre en forme de parallélogramme, caractérisé en ce que deux bords parallèles du cadre sont de forme triangulaire et en ce que le couvercle est, soit au moins en partie, ajouré, soit le couvercle est équipé d'un panneau photovoltaïque, d'une sonorisation ou d'une signalisation lumineuse.

Ainsi, grâce à l'invention, on dispose d'une solution permettant de réaliser aisément, par pliage un élément d'habillage de paroi offrant un volume de réception, par exemple de végétaux, tout en étant aisé à accrocher et à décrocher d'une paroi grâce aux organes d'accrochage.

Selon des aspects avantageux, mais non obligatoires de l'invention, un tel élément peut comprendre une ou plusieurs des caractéristiques suivantes :

Les bords triangulaires sont équipés, chacun, d'au moins un organe d'accrochage de manière amovible de l'élément sur une paroi.

Le couvercle est totalement plein.

Un moyen de culture de végétaux est inséré dans le volume défini par le fond plié et maintenu en place par le couvercle.

Un paillage est placé sur le moyen de culture et sous le couvercle et affleurant au plan du cadre lorsque le couvercle et le fond sont insérés dans le cadre.

L'invention concerne également un kit comportant au moins un élément d'habillage, un milieu de culture pour végétaux, du paillage et des végétaux, au moins un autre élément d'habillage choisi parmi les éléments d'habillage pourvus d'un couvercle plein, parmi les éléments d'habillage pourvus d'un couvercle équipé d'un panneau photovoltaïque, d'une sonorisation ou d'une signalisation lumineuse.

Le kit comprend également au moins une structure porteuse formée par au moins deux montants et une traverse.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig.1] est une vue de dessus, en éclaté, des différentes parties constitutives d'un élément d'habillage conforme à un mode de réalisation de l'invention, avant pliage des bords et réalisation de l'élément,
[Fig.2] est une vue, en perspective à partir de la face visible lorsque l'élément est en place sur une paroi et à plus grande échelle, de l'élément de la figure 1 une fois réalisé,
[Fig.3] est une vue, en perspective et à la même échelle, de l'élément de la figure à partir de la face arrière non visible de l'élément,
[Fig.4] est une vue, en perspective et à une autre échelle, d'une partie d'une paroi équipée d'éléments d'habillage selon divers modes de réalisation et
[Fig.5] est une vue de côté, partielle et à plus grande échelle, d'un organe d'accrochage de l'élément sur une paroi, selon un mode de réalisation de l'invention, avant montage sur la paroi.

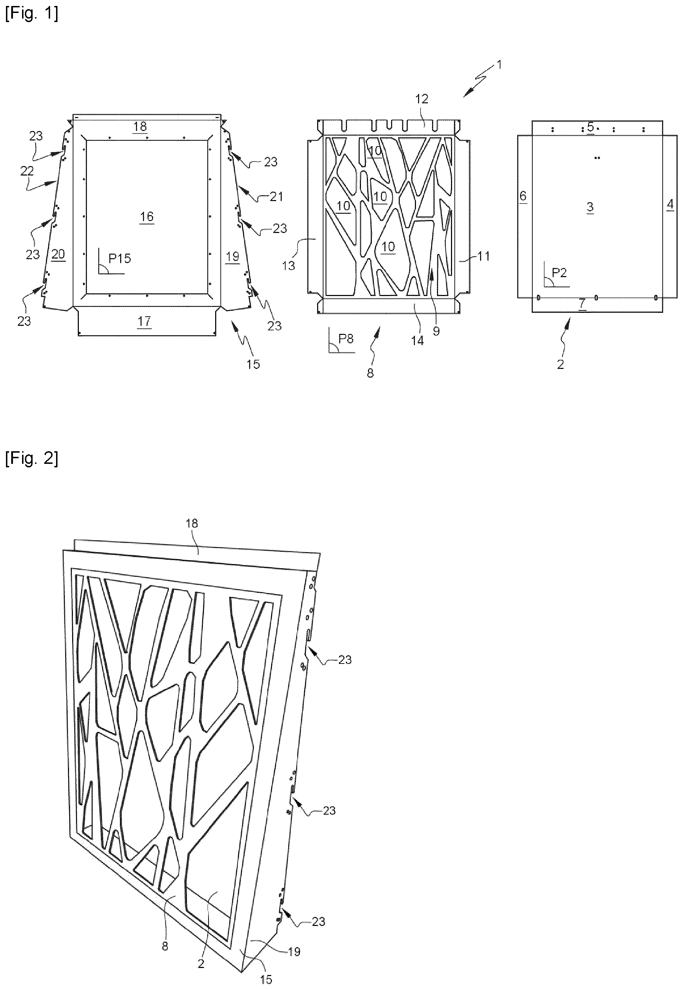

La figure 1 illustre les diverses parties constitutives d'un élément d'habillage 1 conforme à un mode réalisation de l'invention, avant montage de l'élément 1. Les différentes parties sont réalisées en un matériau léger, résistant, insensible aux conditions météorologiques. Par exemple elles sont en acier inoxydable ou en aluminium ou en un autre alliage métallique. En variante, elles sont en un matériau composite ou en polymères. Dans l'exemple illustré aux diverses figures, l'élément 1 a une forme rectangulaire. En variante il peut être de forme carrée et/ou d'une autre dimension. Dans tous les cas, l'élément 1 est, en configuration d'utilisation, un parallélépipède. L'élément 1 est formé de trois parties indépendantes et reliées les unes aux autres de manière amovible.

La première partie, à droite de la figure 1, est le fond 2, initialement en forme de parallélogramme, donc ici rectangulaire. Il est en configuration d'avant montage, à savoir la configuration permettant un transport et un stockage aisés car il occupe un minimum de place dans cette configuration. Il comprend un corps principal 3, plan et plein. Le corps 3 définit un plan principal P2 du fond 2. Tous les bords 4, 5, 6 et 7 du corps 3 sont pliables à angle droit par rapport au plan P2. Ainsi, une fois les bords 4 à 7 pliés, le fond 2 est configuré en parallélépipède. On conçoit que la largeur des bords peut être différente de celle illustrée afin de faire varier la hauteur du fond 2, donc son volume interne. Il en est de même pour les dimensions du fond 2.

La deuxième partie est représentée en partie centrale à la figure 1. Il s'agit du couvercle 8. Comme pour le fond 2, le couvercle 8 est initialement en forme de parallélogramme, donc ici rectangulaire. Il est en configuration d'avant montage, à savoir la configuration permettant un transport et un stockage aisés car il occupe un minimum de place dans cette configuration. Ici, le corps principal 9 du couvercle 8 est plan et ajouré, des découpes 10 de formes complexes et de dimensions variables étant ménagées. Le corps 9 définit un plan principal P8 du couvercle 8. Tous les bords 11, 12, 13 et 14 du corps 9 sont pliables à angle droit par rapport au plan P8, cela de manière similaire aux bords 4 à 7 du fond 2. Ainsi, une fois les bords 11 à 14 pliés, le couvercle 8 est lui aussi configuré en parallélépipède. On conçoit que la largeur des bords peut être différente de celle illustrée afin de faire varier la hauteur du couvercle 8, donc son volume interne. Il en est de même pour ses dimensions.

La troisième partie de l'élément d'habillage 1 est représentée en partie gauche de la figure 1. Il s'agit d'un cadre 15. Ce dernier peut être en un autre matériau que le fond 2 et/ou le couvercle 8. La lumière 16 du cadre 15 est de forme et de dimension adaptées à celles du couvercle 8, de sorte que celui-ci affleure et soit coplanaire au plan principal P15. Deux bords 17, 18 sont parallèles, rectilignes et à largeur constante. Ces bords 17, 18 sont comme pour les bords 4 à 7 du fond 2 et les bords 11 à 14 du couvercle 8, pliables à angle droit, le cadre 15 étant, comme le fond 2 et le couvercle 8, initialement à plat et formant un élément plan. Ici, les bords 17, 18 sont ceux définissant la largeur du cadre 15. En variante, ce peut être les bords définissant la longueur du cadre 15, lorsque ce dernier est rectangulaire.

Les deux autres bords 19, 20 du cadre 15 sont plans, identiques et parallèles, mais à largeurs variables, cela de manière régulière et sur toutes leurs longueurs. En d'autres termes, ils sont configurés en triangle selon leurs longueurs. Dans un autre mode de réalisation, la variabilité de la largeur des bords 19, 20 n'est pas régulière sur la longueur de sorte que les bords sont en forme de double triangle, voire plus. Dans tous les cas, les bords 19, 20 sont également pliables à angle droit et définissent au moins des bords inclinés, présentant au moins une inclinaison selon qu'ils sont en forme de simple triangle ou de triangle complexe. Les bords 19, 20 sont pourvus, chacun, sur leurs zones externes libres 21, respectivement 22, d'au moins un organe d'accrochage 23. Ici, chaque bord comprend trois organes 23 identiques et régulièrement repartis sur la longueur de chaque zone 21, 22. En variante, le nombre et/ou la répartition des organes d'accrochage sont différents. De même, ils peuvent ne pas être tous identiques.

Dans le mode de réalisation de l'invention illustré aux diverses figures, les organes d'accrochage 23 sont formés par une découpe en forme de L, définissant ainsi une partie pleine en forme de crochet ménagée dans les zones externes 21, 22 des bords 19, 20. En variante, les découpes peuvent allongées et ondulées, définissant alors une gorge à largeur variable pour clipsage. Elles peuvent être d'une autre forme, plus ou moins complexe, sachant que les organes 23 doivent permettre l'accrochage et le décrochage du cadre 15 de manière rapide, facile et répétée cela sans affecter les caractéristiques mécaniques et structurelles du cadre 15 et du support sur lequel l'élément 1 est monté. Aussi, la forme retenue pour les organes 23 est la forme préférée, mais non exclusive, tout en étant d'une fabrication rapide et simple.

La figure 2 illustre un élément d'habillage 1 prêt à être installé. Ici, le couvercle 8 coiffe le fond 2. Le couvercle 8 affleure à la lumière 16 du cadre 15 dans lequel il est placé. Ainsi, les plans principaux P8 et P15 du couvercle 8 et du cadre 15 sont confondus. On note que l'encombrement de l'élément 1 correspond à l'encombrement du cadre 15 lorsque les bords 17 à 20 sont pliés, du fait que le couvercle 8 et le fond 2 sont logés dans la lumière 16 du cadre 15.

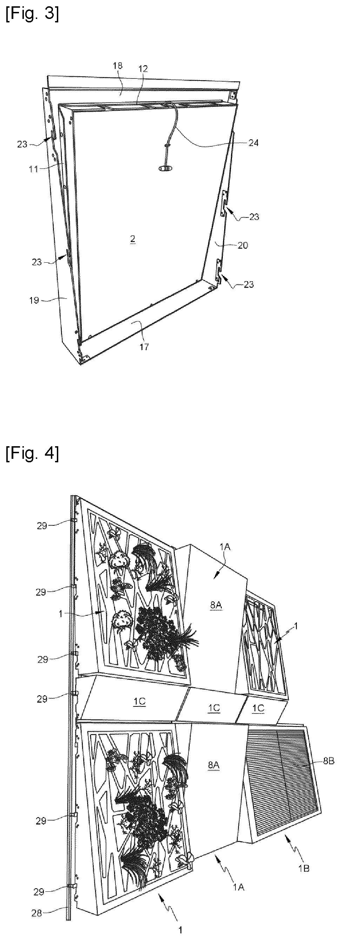

La figure 3 est similaire à la figure 2 et illustre l'arrière de l'élément 1. Les bords 11 et 12 du couvercle 8 sont visibles. On note que l'ensemble formé par le fond 2 et le couvercle 8 sont intégrés dans le volume formé par les bords 17 à 20 repliés du cadre 15. En d'autres termes, le cadre masque complètement le fond 2 et le couvercle 8, seul le corps 9 découpé du couvercle étant visible, à partir de la face avant du cadre 15. Avec une telle configuration, il est aisé de mettre en place l'élément d'habillage grâce aux organes d'accrochage 23 du moment que le cadre peut être mis en place sur une paroi. On note la présence d'un câble ou d'un conduit référencé 24 sortant du fond 2. Le conduit 24 peut être un conduit d'irrigation, un câble électrique, un câble audio ou vidéo ou tout autre gaine ou conduit, selon la nature du couvercle 8 et/ou du contenu logé dans le fond 2. En variante, le nombre et/ou la nature du conduit peuvent être différents de ce qui est représenté.

La figure 4 illustre une partie d'une paroi habillée par plusieurs éléments d'habillage 1. Certains des éléments d'habillage correspondent aux éléments 1 décrits aux figures 1 à 3. Comme on le note pour les éléments 1 situés à gauche de la figure 4, ces derniers servent de bac pour la croissance de végétaux. Pour cela, un milieu de culture, par exemple du terreau, de la sphaigne ou autre, est inséré dans le volume défini par le fond 2 une fois les bords 4 à 7 pliés. Les orifices 10 ménagés dans le couvercle 8 assurent la pousse des végétaux à l'extérieur ainsi que leurs visibilités. Dans un mode de réalisation, pour éviter toute perte du milieu de culture et conserver l'humidité de ce dernier, un paillage est placé sous le couvercle 8 et affleurant au plan P15 du cadre 15 lorsque le couvercle 8 et le fond 2 sont insérés dans le cadre 15. Les végétaux passent à travers le paillage grâce à des orifices. Un tel paillage peut, par exemple, être à base végétale, à base de cheveux, de mousse synthétique ou autre.

L'élément 1 situé à droite de la figure 4 est vide, ou du moins aucun végétal n'a encore poussé. Dans un tel cas, le couvercle 8 grâce aux découpes 10 assure une fonction uniquement esthétique. En partie centrale de la partie de paroi de la figure 4, deux éléments 1A conformes à un autre mode de réalisation de l'invention sont fixés. Ici, le couvercle 8A de chaque élément 1A est plein et plat. Les éléments 1A peuvent recevoir divers éléments tels que des modules techniques, de la sonorisation ou autres. En fonction de l'aspect, lisse ou non et/ou de la couleur des couvercles 8A il est possible de faire varier l'aspect de chaque élément 1A. L'élément 1B, illustré en bas à droite de la figure 4, représente un élément 1B dont le couvercle 8B est équipé d'un panneau photovoltaïque.

À la figure 4, on note également la présence d'éléments 1C, similaires aux éléments 1A, mais de dimensions moindres. Grâce à l'invention, comme cela est illustré à la figure 4, il est possible d'habiller une paroi avec des éléments 1, 1A, 1B, 1C ayant des aspects et/ou des dimensions variés, cela selon le souhait de l'utilisateur et de manière modulable, à partir d'éléments dits standards, étant entendu que, pour un même élément 1, 1A, 1B, 1C, il est possible d'obtenir un aspect diffèrent en changeant le couvercle 8, 8A, 8B et/ou la nature de ce que contient l'élément 1, 1A, 1B, 1C, par exemple des végétaux, du matériel de signalisation lumineuse , de sonorisation, de production d'énergie ou autre.

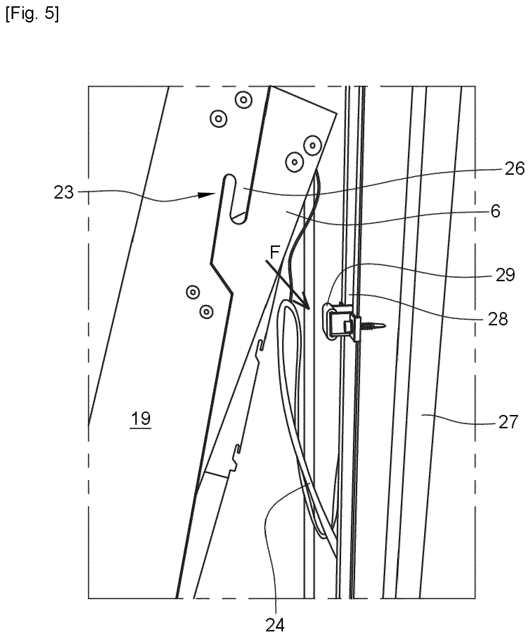

La figure 5 illustre, à plus grande échelle, un organe d'accrochage 23, selon un mode de réalisation préféré, en position de prémontage. Il s'agit de l'organe 23 situé en haut à gauche à la figure 3. Une partie du bord 19 plié et du bord 6 du fond 2 étant visible, de même qu'une portion de la gaine 24 qui, dans l'illustration, est une gaine d'arrosage par gouttes à gouttes. La configuration en L de la découpe 25 de l'organe 23 permet de définir une patte pleine 26 formant, avec la découpe 25, un crochet permettant d'accrocher l'élément 1 sur une paroi.

Pour effectuer l'accrochage, comme cela ressort de la figure 5, la paroi 27, par exemple une façade d'un bâtiment, est équipée d'un treillis métallique comportant des montants verticaux 28 parallèles et régulièrement espacés sur lesquels sont fixés des traverses 29 parallèles et régulièrement espacées. L'ensemble définit ainsi un treillis fixé sur la paroi. Les moyens de fixation des montants 29 et des traverses 29 entre eux et sur la paroi 27 sont connus en soi, par exemple il s'agit de vis, de rivets ou autres. Il est aisé, comme illustré à la figure 5, d'accrocher, selon la flèche F, l'organe 23 par sa patte 26 sur une traverse 29. Le nombre et/ou la position des montants 28 et des traverses 29 sont adaptables d'une part à la configuration de la paroi 27 et, d'autre part, aux nombres et/ou dimensions et/ou configurations des éléments 1. Grâce à l'invention, on réalise l'habillage d'une paroi de manière aisée et facilement modifiable, cela sans affecter la paroi, une fois que les montants 28 et les traverses 29 sont en place.

Selon un mode de réalisation avantageux, un kit d'habillage est fourni. Un tel kit comprend au moins une structure porteuse formée par au moins deux montants 28 et une traverse 29, au moins un élément d'habillage formé par un fond 2, un couvercle 8 ajouré avec des découpes 10, un cadre 15, un milieu de culture pour végétaux, du paillage et des végétaux. En variante avantageuse, un tel kit comprend également au moins un autre élément d'habillage choisi parmi les éléments 1A à couvercles 8A pleins, les éléments 1B pourvus d'un panneau photovoltaïque 8B ou les éléments 8C de dimensions autres que les éléments 1, 1A, 1B. On conçoit que, en fonction du nombre et du type d'éléments d'habillage composant le kit et de montants et traverses, on peut obtenir divers habillages, modifiables, d'une paroi.

Avantageusement de tels kits ont des dimensions adaptées pour être transportés par container.

## Revendications

1. Elément d'habillage (1, 1A, 1B, 1C) d'une paroi, comprenant un fond (2) en forme de parallélogramme plan et plein pourvu de quatre bords ( 4, 5, 6, 7) repliables, ledit fond (2) formant un parallélépipède lorsque ses bords (4, 5, 6, 7) sont pliés à angle droit par rapport au plan principal (P2) du fond (2), un couvercle (8, 8A, 8B) en forme de parallélogramme plan pourvu de quatre bords (11, 12, 13, 14) repliables, ledit couvercle (8, 8A, 8B) formant un parallélépipède lorsque ses bords (11, 12, 13, 14) sont pliés à angle droit par rapport au plan principal (P8) du couvercle (8), ce dernier obturant de manière amovible l'ouverture du parallélépipède formé par le fond (2), l'ensemble, formé par le fond (2) et le couvercle (8, 8A, 8B), étant inséré de manière amovible dans la lumière (16) d'un cadre (15) en forme de parallélogramme, **caractérisé en ce que** deux bords parallèles (19, 20) du cadre (15) sont de forme triangulaire et **en ce que** le couvercle (8) est, soit au moins en partie, ajouré (10), soit le couvercle (8A, 8B) est équipé d'un panneau photovoltaïque, d'une sonorisation ou d'une signalisation lumineuse.

2. Élément selon la revendication 1, **caractérisé en ce que** les bords triangulaires (19, 20) sont équipés, chacun, d'au moins un organe d'accrochage (23) de manière amovible de l'élément (1, 1A, 1B, 1C) sur une paroi (27).

3. Élément selon la revendication 1, **caractérisé en ce que** le couvercle (8A, 8B) est totalement plein.

4. Élément selon la revendication 1, **caractérisé en ce qu'**un moyen de culture de végétaux est inséré dans le volume défini par le fond (2) plié et maintenu en place par le couvercle (8).

5. Élément selon la revendication 4, **caractérisé en ce qu'**un paillage est placé sur le moyen de culture et sous le couvercle (8) et affleurant au plan (P15) du cadre (15) lorsque le couvercle (8) et le fond (2) sont insérés dans le cadre (15).

6. Kit comportant au moins un élément d'habillage selon la revendication 4, un milieu de culture pour végétaux, du paillage et des végétaux, au moins un autre élément d'habillage choisi parmi les éléments d'habillage (1A, 1C) pourvus d'un couvercle plein (8A), parmi les éléments d'habillage (1B) pourvus d'un couvercle (8B) équipé d'un panneau photovoltaïque, d'une sonorisation ou d'une signalisation lumineuse.

7. Kit selon la revendication 6, **caractérisé en ce qu'**il
comprend également au moins une structure porteuse formée par au moins deux montants (28) et une traverse (29).
